# DEMANDE DE BREVET EUROPEEN

(11) **EP 2 400 278 A1**
(43) Date de publication de la demande: **28.12.2011**
(21) Numéro de dépôt: 11169393.3
(22) Date de dépôt: 10.06.2011
(51) Int. Cl.: G01J 3/02

(54) **Dispositif d'emission optique a répartition spectrale programmable**

(30) Priorité: 25.06.2010 FR 1002676
(71) Demandeur: Thales, 92200 Neuilly Sur Seine (FR)
(72) Inventeur: Buisset, Christophe, 06620 LE BAR SUR LOUP (FR); Viard, Thierry, 06210 MANDELIEU (FR); Zamkotsian, Frédéric, 13006 MARSEILLE (FR); Blanc, Jean-François, 06210 MANDELIEU (FR)
(74) Mandataire: Bréda, Jean-Marc

(57) **Abrégé**

Le domaine général de l'invention est celui des dispositifs optiques à émission spectrale programmable contrôlée par un utilisateur. Le dispositif comprend essentiellement :
- une source d'émission polychromatique ponctuelle (1), un premier ensemble de dispersion spectrale (2, 3) agencé de façon à former une image réelle et dispersée spectralement de ladite source ;
- un composant programmable (4) de type « PMDG », acronyme anglo-saxon signifiant « Programmable Micro-Diffraction Grating » ou un composant programmable de type « DMD», acronyme anglo-saxon signifiant « « digital micromirror device ». Ce composant est disposé de façon que l'image réelle et dispersée de la source soit située sur sa surface d'activation, ladite surface étant programmée de façon à assurer un filtrage spectral de ladite image réelle et dispersée
- un second ensemble de recomposition spectrale (5, 6) formant de l'image réelle dispersée et filtrée par le composant « PMDG » ou « DMD », une image unique recomposée et filtrée de la source.

## Description

Le domaine de l'invention est celui des sources d'émission de lumière polychromatique utilisées pour la calibration ou le test d'instruments d'optique, comme des spectromètres par exemple.

Pour certaines applications, il est nécessaire de disposer de sources polychromatiques dont on puisse parfaitement ajuster la répartition spectrale. On citera, à titre de premier exemple, les applications spatiales où les équipements optiques nécessitent des contrôles au sol et des calibrations au sol et en en vol avec des sources lumineuses ayant des caractéristiques spectrales bien particulières. A titre de second exemple, ces sources doivent être capables de simuler l'émission d'un « corps noir à une température de couleur donnée à partir d'une source de lumière classique, sans subir la contrainte de température.

Actuellement, pour réaliser cette fonction, on met en oeuvre plusieurs types de dispositifs optiques.

Le premier dispositif comprend une source à large bande spectrale associée à un dispositif de filtrage. De façon simple, le dispositif de filtrage peut être une roue à barillets comportant divers filtres optiques. Le dispositif de filtrage peut également être un monochromateur. Ces dispositifs ne permettent pas de générer des profils spectraux complexes analogiques autres que des fonctions « porte ». De plus, le spectre émis ne peut être ajusté de façon dynamique en un temps très court.

Le second dispositif comprend une source laser accordable. Là encore, il est très difficile de générer des profils spectraux complexes. De plus, l'étendue spectrale de ces sources est limitée à quelques centaines de nanomètres au mieux.

Le dispositif d'émission spectrale selon l'invention ne présente pas ces inconvénients. Il repose sur une utilisation particulière de composants optiques de type « MOEMS ». « MOEMS » est l'acronyme anglo-saxon signifiant « Micro-Optical-Electro-Mechanical System ». Ce composant peut être utilisé en tant que composant « PMDG », acronyme anglo-saxon signifiant « Programmable Micro-Diffraction Grating » ou en tant que composant « DMD », acronyme anglo-saxon signifiant « Digital Micromirror Device ».

Ces types de composant appartiennent au domaine plus général des « MEMS », acronyme anglo-saxon signifiant « Micro-Electro-Mechanical System ». Ces composants permettent de réaliser un certain nombre de fonctions ou de traitements optiques sur des faisceaux optiques. Ces systèmes comportent des micro-mécanismes intégrés dont les déplacements sont commandés électriquement. Classiquement, ces dispositifs sont fabriqués à partir des technologies mises au point pour la réalisation des composants destinés à l'électronique. A titre d'exemple, Ils sont ainsi réalisés sur des substrats en silicium, en dioxyde de silicium, en nitrure de silicium ou en arséniure de gallium.

Lorsque le pas des micro-mécanismes est suffisamment fin, il devient possible de réaliser des réseaux de diffraction programmables permettant d'obtenir une très large gamme de profil de réseaux de diffraction. On appelle ces composants « PMDG ». On peut, notamment, trouver des informations complémentaires sur la réalisation de ce type de composant dans le brevet US 5 757 536 intitulé « Electrically-Programmable Diffraction Grating » et dans le brevet US 6 329 738 intitulé « Precision Electrostatic Actuation and Positioning ». On peut également trouver des informations sur l'utilisation de ce type de composant dans la demande WO 2004/070782 intitulée « Programmable Diffraction Grating Sensor » et dans la demande WO 2007/001382 intitulée « Spectra Generator for Test and Calibration». Dans la mesure où les déplacements générés par ces systèmes sont très faibles, il est possible de les configurer ou de les reconfigurer dans un temps très bref.

Les composants « DMD » sont des composants comportant des centaines de milliers de micro-miroirs orientables individuellement. Chaque micro-miroir mesure quelques microns. On peut ainsi rediriger un faisceau incident en une multitude de micro-faisceaux orientés dans des directions privilégiées. Généralement, deux paires d'électrodes contrôlent la position de chaque miroir par attraction électrostatique. Il est possible de moduler l'intensité émise dans une direction donnée en orientant les micro-miroirs périodiquement pendant une fraction de la période dans la direction souhaitée. Ces composants « DMD » sont utilisés notamment en imagerie mais ne sont pas limités à ce seul domaine d'application.

L'invention a pour objet un dispositif optique à émission spectrale programmable comprenant une source d'émission polychromatique ponctuelle, un premier ensemble de dispersion spectrale agencé de façon à former une image réelle et dispersée spectralement de ladite source d'émission, caractérisé en ce que ledit dispositif comporte :
- un composant programmable de type « PMDG », acronyme anglo-saxon signifiant « Programmable Micro-Diffraction Grating » ou un composant programmable de type « DMD», acronyme anglo-saxon signifiant « Digital Micromirror Device », ledit composant disposé de façon que l'image réelle et dispersée de la source soit située sur sa surface d'activation, ladite surface étant programmée de façon à assurer un filtrage spectral de ladite image réelle et dispersée ;
- un second ensemble de recomposition spectral formant de l'image réelle dispersée et filtrée par le composant « PMDG » ou « DMD », une image unique recomposée et filtrée de la source.

Avantageusement, le dispositif comprend une optique de collimation catoptrique formant de l'image de la source d'émission polychromatique une image à l'infini reprise par le premier ensemble de dispersion spectrale.

Préférentiellement, le premier ensemble de dispersion spectrale comporte un premier réseau de diffraction plan à pas constant ou un prisme ou un « grisme », ensemble optique comprenant un prisme et un réseau de difffraction.

De la même façon, le second ensemble de recomposition spectrale comporte un second réseau de diffraction plan à pas constant ou un prisme ou un « grisme ».

Avantageusement, le second ensemble de recomposition spectrale a des caractéristiques de dispersion voisines ou identiques à celles du premier ensemble de dispersion spectrale.

Avantageusement, le premier ensemble de dispersion spectrale comporte un premier miroir concave et le second ensemble de dispersion spectrale comporte un second miroir concave agencés de façon que le composant programmable de type « PMDG » ou « DMD » soit dans le plan focal du premier miroir concave et du second miroir concave. Dans ce cas, le premier et le second miroir concaves peuvent être un seul et même miroir.

Avantageusement, l'émission spectrale programmée est représentative de l'émission spectrale d'une source de calibration. Plus précisément, l'émission spectrale de la source de calibration est celle d'un corps noir à une température de couleur prédéterminée dans une plage de longueur d'onde prédéterminée. Dans une variante, l'émission spectrale de la source de calibration est celle d'un corps noir à une température de couleur prédéterminée dans une plage de longueur d'onde prédéterminée multipliée par la transmission de l'atmosphère terrestre dans ladite plage de longueur d'onde prédéterminée.

L'invention concerne également un télescope comportant un dispositif optique à émission spectrale programmable comme défini plus haut. Ce télescope peut être embarqué sur un satellite pour réaliser de l'observation terrestre.

L'invention sera mieux comprise et d'autres avantages apparaîtront à la lecture de la description qui va suivre donnée à titre non limitatif et grâce aux figures annexées parmi lesquelles :
La figure 1 représente le synoptique général d'un dispositif selon l'invention ;
La figure 2 représente le spectre optique d'une source lumineuse avant filtrage et après filtrage dans un dispositif selon l'invention ;
Les figures 3 et 4 représentent un exemple de montage optique d'un dispositif selon l'invention. Sur la figure 3, on a représenté la propagation de quatre rayons lumineux d'une même longueur d'onde à travers les différents éléments optiques. Sur la figure 4, on a représenté la propagation de trois rayons lumineux de longueur d'onde différente à travers les différents éléments optiques.

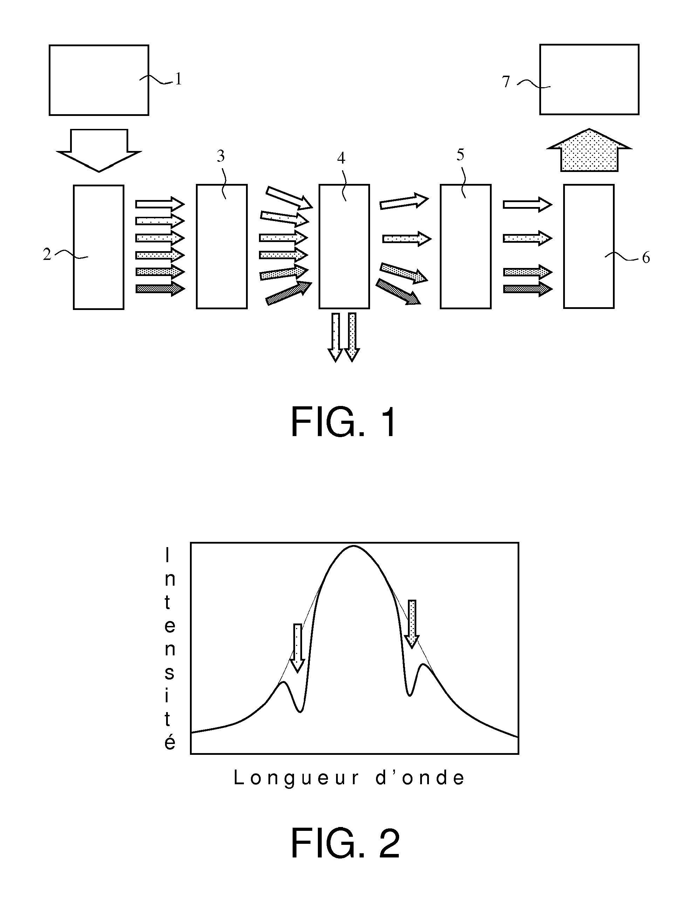

Le synoptique général d'un dispositif selon l'invention est représenté en figure 1. Il comprend essentiellement et dans cet ordre, une source ponctuelle polychromatique 1, un premier dispositif de dispersion spectrale 2 permettant d'étaler spatialement le spectre optique de la source, un premier ensemble optique 3 permettant de réaliser une image réelle et dispersée de la source 1, un composant programmable de type « PMDG » ou « DMD » 4 disposé dans le plan de l'image réelle et dispersée de la source 1 et permettant de filtrer certaines composantes du spectre de l'image dispersée, un second ensemble optique 5 permettant de collimater l'image réelle dispersée et filtrée de la source, un second dispositif de dispersion spectrale 6 formant de l'image réelle dispersée et filtrée par le composant « PMDG » ou « DMD », une image unique recomposée et filtrée de la source. Enfin, cette image filtrée de la source est transmise à un instrument d'optique 7 qui peut être, par exemple, un spectrophotomètre.

A titre d'exemple, sur la figure 1, on a décomposé le spectre initial de la source représenté par une flèche large en six bandes spectrales représentées par des flèches étroites ayant un motif différent. Si le composant « PMDG » ou « DMD » est programmé pour supprimer deux des six bandes spectrales, la seconde et la quatrième sur la figure 1, alors le spectre final de la source filtrée ne comporte plus que quatre des six bandes spectrales. En figure 2, on a représenté l'intensité spectrale de la source en fonction de la longueur d'onde. La courbe en trait continu fin représente le spectre avant filtrage et la courbe en trait continu épais représente le spectre après filtrage.

La source polychromatique peut être une source « blanche » émettant dans le visible ou l'infrarouge. Il est essentiel qu'au moins une de ses dimensions soit réduite afin de permettre au dispositif de séparation spectrale de former un spectre de la source sur la surface du « DMD » ou du « PMDG » Ainsi, on peut utiliser soit des sources ponctuelles, soit des sources en forme de fente lumineuse.

Les premier et second dispositifs de dispersion spectrale sont préférentiellement des réseaux de diffraction fonctionnant par réflexion. Il est possible d'utiliser des dispositifs à prisme de dispersion. On peut également combiner réseau et prisme dans un seul composant appelé « grisme ».

Lorsqu'on choisit un réseau, on définit la forme générale du réseau, son pas, les angles d'incidence et de diffraction en fonction des caractéristiques de la source et notamment de sa longueur d'onde centrale et de sa largeur spectrale à mi-hauteur. Il faut être tout particulièrement vigilant à éviter le chevauchement des ordres de diffraction des réseaux. En pratique, si la longueur d'onde la plus basse du spectre d'émission de la source vaut λ, la longueur d'onde la plus haute ne doit pas dépasser 2.λ.

On peut utiliser par exemple des réseaux de diffraction plans à pas constant, le profil du pas étant adapté pour obtenir le meilleur rendement possible de diffraction.

Bien entendu, les problèmes de chevauchement d'ordre n'existent pas dans le cas des prismes qui fonctionnent par dispersion spectrale et non pas par diffraction comme les réseaux.

D'une façon générale, il est intéressant de choisir des miroirs ou des ensembles catoptriques simples pour réaliser les différents ensembles optiques. On évite ainsi d'introduire des dispersions spectrales parasites, on optimise les rendements photométriques et on peut aboutir, par le repliement naturel des faisceaux lumineux, à des solutions optiques simples et compactes.

La fonction usuelle d'un composant « PMDG » est de réaliser un réseau de diffraction programmable. En clair, dans son utilisation classique, ce type de composant est éclairé en totalité par une onde polychromatique, chacun des micro-actionneurs qui composent le « PMDG » étant éclairé par un micro-faisceau de lumière comportant tout le spectre de l'onde. Le composant diffracte ensuite ladite onde polychromatique selon une loi qui peut être complexe et qui est imposée par les positions respectives des différents micro-actionneurs. On retrouve ce mode de fonctionnement dans les différents brevets ou demandes de brevet qui ont été précédemment cités. Dans le dispositif selon l'invention, le mode de fonctionnement du composant « PMDG » est sensiblement différent. En effet, la décomposition et la recomposition spectrale sont réalisées par des réseaux de diffraction non programmables, le composant « PMDG » ayant une fonction de sélection spectrale. Dans ce cas, il est possible de réaliser des filtrages extrêmement précis avec une grande résolution du spectre émis par la source, filtrages beaucoup plus difficile à réaliser par les méthodes de filtrage de l'art antérieur. D'autre part, comme il a été dit, il est très facile et très rapide de modifier la configuration du composant « PMDG » de façon à obtenir le filtrage spectral souhaité.

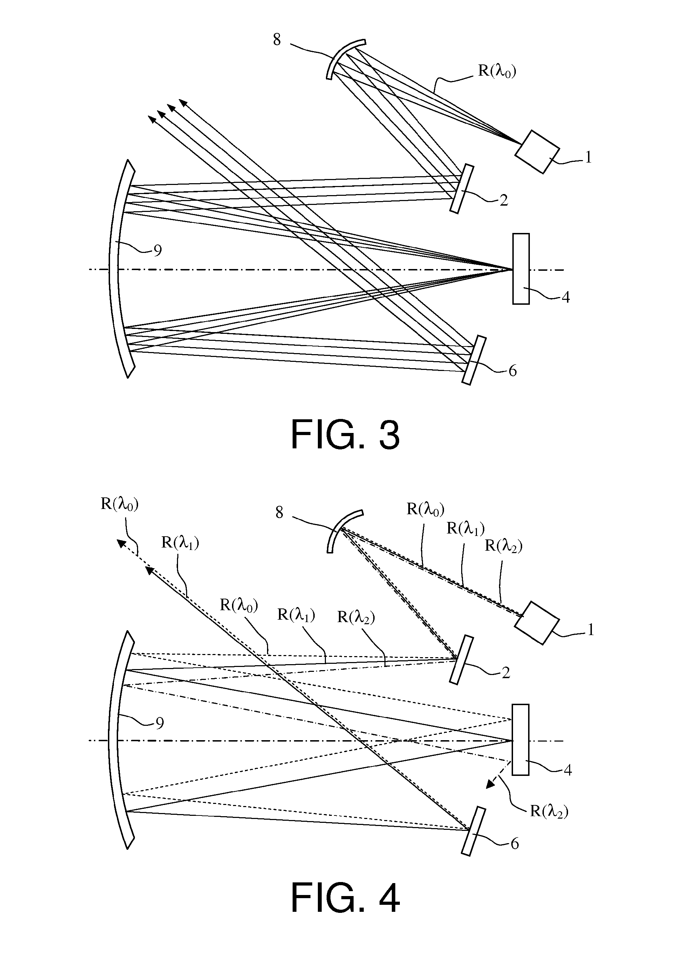

A titre d'exemple, les figures 3 et 4 représentent un exemple de montage optique d'un dispositif selon l'invention. Le dispositif comprend une source ponctuelle polychromatique 1, un miroir de collimation 8, un premier dispositif de dispersion spectrale 2 permettant d'étaler spatialement le spectre optique de la source, un miroir de focalisation 9 permettant de réaliser une image réelle et dispersée de la source 1, un composant programmable de type « PMDG » ou « DMD » 4 disposée dans le plan de l'image réelle et dispersée de la source 1 et permettant de filtrer certaines composantes du spectre de l'image dispersée, le miroir 9 permettant de collimater l'image réelle dispersée et filtrée de la source après réflexion sur le « PMDG » ou le « DMD », un second dispositif de dispersion spectrale 6 formant de l'image réelle dispersée et filtrée par le composant « PMDG » ou « DMD », une image unique recomposée, filtrée et à l'infini de la source initiale 1.

Le miroir 8 est selon les caractéristiques de la source et la qualité souhaitée soit un miroir sphérique soit un miroir parabolique. Les réseaux de diffraction 2 et 6 sont des réseaux plans à pas constant. Il serait possible de les remplacer par des prismes ou des « grismes ». Dans cette configuration, il est préférable de choisir des réseaux parfaitement identiques fonctionnant dans les mêmes conditions d'incidence et de diffraction de façon à obtenir une recombinaison parfaite de l'image réelle dispersée et filtrée de la source. L'utilisation d'un miroir 9 unique pour la focalisation et la collimation de la lumière avant et après filtrage par le composant programmable de type « PMDG » ou « DMD » 4 permet de simplifier le montage. Ce miroir concave peut être sphérique ou asphérique selon les ouvertures des faisceaux, la résolution souhaitée et la taille de l'image dispersée. Les caractéristiques du composant « PMDG » ou « DMD » sont adaptées en fonction de la répartition spectrale de la source et de la résolution spectrale attendue. Comme on le voit sur les figures 3 et 4, il est possible de replier les faisceaux optiques de façon que le dispositif occupe un encombrement le plus réduit possible.

Sur les figures 3 et 4, on a représenté le cheminement des rayons lumineux à travers le dispositif à filtrage programmable. Sur la figure 3, on a représenté la propagation de quatre rayons lumineux R(λo) d'une même longueur d'onde λ₀ à travers les différents éléments optiques. Sur la figure 4, on a représenté la propagation de trois rayons lumineux R(λo), R(λ₁) et R(λ2) de longueur d'onde différentes λo, λ1 et λ2 à travers les différents éléments optiques. Ces trois rayons sont issus de la source d'émission dans la même direction de propagation. A titre d'exemple, le composant 4 supprime du spectre la composante émise à la longueur d'onde λ₂. Les faisceaux émis par la source initialement confondus à la sortie de la source se retrouvent confondus à la sortie du dispositif.

La conception compacte de ce dispositif d'émission optique le rend apte à être monté sur des télescopes spatiaux embarqués sur satellite.

Dans un mode de réalisation privilégiée, l'émission spectrale programmée est représentative de l'émission spectrale d'une source de calibration. Plus précisément, l'émission spectrale de la source de calibration est celle d'un corps noir à une température de couleur prédéterminée dans une plage de longueur d'onde prédéterminée.

Dans une variante, l'émission spectrale de la source de calibration est celle d'un corps noir à une température de couleur prédéterminée multipliée par la transmission de l'atmosphère terrestre dans ladite plage de longueur d'onde prédéterminée, permettant ainsi de simuler les conditions d'utilisation d'une source embarquée sur satellite éclairant des zones terrestres à travers l'atmosphère. On peut, bien entendu, tenir compte, dans cette simulation, de l'épaisseur d'atmosphère traversée ou de sa composition.

## Revendications

1. Dispositif optique à émission spectrale programmable comprenant une source d'émission polychromatique ponctuelle (1), un premier ensemble de dispersion spectrale (2, 3) agencé de façon à former une image réelle et dispersée spectralement de ladite source d'émission, **caractérisé en ce que** ledit dispositif comporte :
- un composant programmable (4) de type « PMDG », acronyme anglo-saxon signifiant « Programmable Micro-Diffraction Grating » ou un composant programmable de type « DMD», acronyme anglo-saxon signifiant « Digital Micromirror Device », ledit composant disposé de façon que l'image réelle et dispersée de la source soit située sur sa surface d'activation, ladite surface étant programmée de façon à assurer un filtrage spectral de ladite image réelle et dispersée ;
- un second ensemble de recomposition spectrale (5, 6) formant de l'image réelle dispersée et filtrée par le composant « PMDG » ou « DMD », une image unique recomposée et filtrée de la source.

2. Dispositif optique à émission spectrale programmable selon la revendication 1, **caractérisé en ce que** le dispositif comprend une optique de collimation catoptrique (8) formant de l'image de la source d'émission polychromatique une image à l'infini reprise par le premier ensemble de dispersion spectrale.

3. Dispositif optique à émission spectrale programmable selon la revendication 2, **caractérisé en ce que** le premier ensemble de dispersion spectrale comporte un premier réseau de diffraction (2) plan à pas constant.

4. Dispositif optique à émission spectrale programmable selon la revendication 2, **caractérisé en ce que** le premier ensemble de dispersion spectrale comporte un prisme.

5. Dispositif optique à émission spectrale programmable selon les revendications 2, 3 et 4, **caractérisé en ce que** le premier ensemble de dispersion spectrale comporte un « grisme », ensemble optique comprenant un prisme et un réseau de difffraction.

6. Dispositif optique à émission spectrale programmable selon la revendication 2, **caractérisé en ce que** le second ensemble de recomposition spectrale comporte un second réseau de diffraction (2) plan à pas constant.

7. Dispositif optique à émission spectrale programmable selon la revendication 2, **caractérisé en ce que** le second ensemble de recomposition spectrale comporte un prisme.

8. Dispositif optique à émission spectrale programmable selon les revendications 2, 6 et 7, **caractérisé en ce que** le second ensemble de recomposition spectrale comporte un «grisme», ensemble optique comprenant un prisme et un réseau de difffraction.

9. Dispositif optique à émission spectrale programmable selon l'une des revendications 6 à 8, **caractérisé en ce que** le second ensemble de recomposition spectrale a des caractéristiques de dispersion voisines ou identiques à celles du premier ensemble de dispersion spectrale.

10. Dispositif optique à émission spectrale programmable selon l'une des revendications 3 à 9, **caractérisé en ce que** le premier ensemble de dispersion spectrale comporte un premier miroir concave et **en ce que** le second ensemble de dispersion spectrale comporte un second miroir concave agencés de façon que le composant programmable de type « PMDG » ou « DMD » soit dans le plan focal du premier miroir concave et du second miroir concave.

11. Dispositif optique à émission spectrale programmable selon la revendication 10, **caractérisé en ce que** le premier et le second miroir concaves sont un seul et même miroir (9).

12. Dispositif optique à émission spectrale programmable selon l'une des revendications précédentes, **caractérisé en ce que** l'émission spectrale programmée est représentative de l'émission spectrale d'une source de calibration.

13. Dispositif optique à émission spectrale programmable selon la revendication 12, **caractérisé en ce que** l'émission spectrale de la source de calibration est celle d'un corps noir à une température de couleur prédéterminée dans une plage de longueur d'onde prédéterminée.

14. Dispositif optique à émission spectrale programmable selon la revendication 12, **caractérisé en ce que** l'émission spectrale de la source de calibration est celle d'un corps noir à une température de couleur prédéterminée dans une plage de longueur d'onde prédéterminée multipliée par la transmission de l'atmosphère terrestre dans ladite plage de longueur d'onde prédéterminée.

15. Télescope, **caractérisé en ce qu'**il comporte un dispositif optique à émission spectrale programmable selon l'une des revendications 1 à 14.

16. Satellite, **caractérisé en ce qu'**il comporte un télescope selon la revendication 15.
